# EUROPÄISCHE PATENTANMELDUNG

(11) **EP 4 664 112 A1**
(43) Veröffentlichungstag der Anmeldung: **17.12.2025**
(21) Anmeldenummer: 24182283.2
(22) Anmeldetag: 14.06.2024
(51) Int. Cl.: G01P 3/52, G01P 3/50, G01S 11/06, G06N 3/08

(54) **COMPUTER-IMPLEMENTIERTES VERFAHREN ZUM ERMITTELN EINER BEWEGUNGSGESCHWINDIGKEIT**

(71) Anmelder: Siemens Aktiengesellschaft, 80333 München (DE)
(72) Erfinder: Hein, Daniel, 81549 München (DE); Häuser, Markus, 91463 Dietersheim (DE); Limmer, Steffen, 80636 München (DE); Strixner, Ferdinand, 81739 München (DE); Weber, Marc Christian, 80339 München (DE)
(74) Vertreter: Siemens Patent Attorneys

(57) **Zusammenfassung**

Die Erfindung betrifft ein computer-implementiertes Verfahren zum Ermitteln einer Bewegungsgeschwindigkeit, umfassend die Schritte a. Bereitstellen eines jeweiligen Geschwindigkeitswerts für eine jeweilige erste Funketikette (TAG) einer Mehrzahl von ersten Funketiketten (TAG) (S1), b. Bereitstellen eines jeweiligen ersten Funksignals und eines jeweiligen ersten Signalstärkeverlaufs für die jeweilige erste Funketikette (TAG) der Mehrzahl der ersten Funketiketten (S2), c. Trainieren eines Modells zum Maschinellen Lernen auf Basis der ersten Geschwindigkeitswerte und der ersten Signalstärkeverläufe, um anhand mindestens eines Signalstärkeverlaufs einen korrespondierenden Geschwindigkeitswert zu ermitteln (S3), d. Ermitteln von mindestens einem zweiten initialen Geschwindigkeitswert durch Anwenden des trainierten Modells zum Maschinellen Lernen auf mindestens einen zweiten Signalstärkeverlauf von mindestens einer zweiten Funketikette (TAG) (S4), e. Ermitteln von mindestens einem zweiten entfalteten Geschwindigkeitswert durch Entfalten einer zugehörigen Phaseninformation der mindestens einen zweiten Funketikette (TAG) unter Berücksichtigung des mindestens einen zweiten initialen Geschwindigkeitswertes (S5), und f. Bereitstellen des mindestens einen zweiten entfalteten Geschwindigkeitswertes als Bewegungsgeschwindigkeit (S6).

Ferner betrifft die Erfindung ein technisches System und ein entsprechendes Computerprogrammprodukt.

## Beschreibung

*Unabhängig vom grammatikalischen Geschlecht eines bestimmten Begriffes sind Personen mit männlicher, weiblicher oder anderer Geschlechteridentität mit umfasst.*

### 1. Technisches Gebiet

Die Erfindung betrifft ein computer-implementiertes Verfahren zum Ermitteln einer Bewegungsgeschwindigkeit. Ferner ist die Erfindung auf ein entsprechendes technisches System und ein Computerprogrammprodukt gerichtet.

### 2. Stand der Technik

Zum Überwachen oder Erfassen von Gütern, Waren, anderen Gegenständen oder Dienstleistungen werden sehr oft Funketiketten, z.B. sogenannte RFID-Transponder oder RFID-Tags (RFID: radio-frequency identification) eingesetzt. Derartige Funketiketten können mittels hochfrequenter Radiowellen von entsprechenden Lesegeräten ausgelesen werden. In vielen Fällen wird dabei das Funketikett durch vom Lesegerät erzeugte Radiowellen mit Energie versorgt und benötigt somit keine eigene Energieversorgung.

Die Funketiketten erlauben eine einfache Identifikation von entsprechend etikettierten Objekten sowie eine Übertragung von Information zwischen Funketikett und Lesegerät.

Mittels eines sogenannten RFID-Gate können Objekte, die mit einem RFID-Tag versehen sind, in einem Umgebungsbereich von typischerweise wenigen Metern ausgelesen und/oder identifiziert werden. Ein typisches RFID-Gate kann dabei z.B. vier Antennen umfassen, die paarweise an zwei getrennten Seitenpfosten angeordnet sind. Davon abweichende Konfigurationen oder eine größere Zahl von Antennen sind jedoch ebenfalls verbreitet.

Mit einem RFID-Tag versehene Objekte können durch ein RFID-Gate in der Regel mit hoher Zuverlässigkeit erkannt und ausgelesen werden, wenn sie diesem RFID-Gate hinreichend nahekommen. Erheblich schwieriger ist es indessen, ein RFID-Tag genauer zu lokalisieren, weil in vielen Fällen nur die empfangenen Signalstärken als Messgrundlage vorliegen, die oft nur eine sehr grobe Abschätzung über eine jeweilige Entfernung des RFID-Tags von den empfangenden Antennen erlauben. Die empfangenen Signalstärken werden häufig auch als RSSI-Werte (RSSI: Received Signal Strength Indicator) bezeichnet. Zudem sind die erfassten Signalstärken in vielen Fällen einem starken Rauschen ausgesetzt und werden von Gegenständen oder Gebäudeelementen in der Umgebung des RFID-Gates stark beeinflusst. Nicht zuletzt hängen die erfassten Signalstärken auch von einer Ausrichtung der Antennen oder der RFID-Tags sowie von dem jeweils etikettierten Objekt ab.

Daher besteht ein Bedarf daran die Ortsauflösung zu verbessern. Ein weiterer Bedarf besteht darin die Ortsbestimmung sowie die Geschwindigkeitsbestimmung zu verbessern.

Üblicherweise wird gemäß dem Stand der Technik lediglich die Signalstärke betrachtet und folglich keine weiteren Messgrößen. Die Phaseninformation findet bisher bei der Abschätzung der Entfernung nicht hinreichend Berücksichtigung. Dabei misst die Phaseninformation (kurz: Phase) im Wesentlichen einen Gangunterschied zwischen dem ausgesendeten RFID-Antennenimpuls ("Eingangswelle") und der vom RFID-Tag zurückgesendeten Signalantwort ("Reflektionswelle"), wenn das Lesegerät und der RFID-Tag in einem bestimmten Abstand zueinander entfernt sind. Der Grund dafür ist, dass bei der Auswertung dieser Information die Phaseninformation für bewegte Objekte nicht eindeutig Rückschluss auf die Entfernung zulassen. Bewegte Objekte unterliegen herkömmlicherweise einer Phasenmodulation von elektromagnetischen Schwingungssignalen. Bekannte Ansätze zur Verwendung der Phaseninformation setzen Annahmen über das erwartete Bewegungsmuster und die Geschwindigkeit des zu vermessenden RFID-Tags voraus. Für den Spezialfall einer bekannten konstanten Geschwindigkeit und einer Bewegungsrichtung sind analytische Formeln zum "Entfalten" ("unwrapping") der gemessenen Phasenwerte als Funktion der Zeit bekannt, um die Phasenmodulation herauszurechnen.

Nachteilig daran ist jedoch, dass die bekannten Ansätze ebenfalls nur eine grobe Abschätzung der Entfernung ermöglichen. Die Abschätzung unterliegt hohen Unsicherheiten oder fehlender Eindeutigkeit. Meist kann ohne weitere Annahmen über die Bewegung des RFID-Tags nicht unterschieden werden, ob sich das Objekt in Ruhe befindet oder zwischen zwei Messpunkten um ein Vielfaches der Wellenlänge weiterbewegt. Ein weiterer Nachteil besteht darin, dass auch die Messung der Phaseninformation verrauscht ist.

Die vorliegende Erfindung stellt sich daher die Aufgabe ein computer-implementiertes Verfahren zum Ermitteln einer Bewegungsgeschwindigkeit bereitzustellen, welches effizienter und zuverlässiger ist.

### 3. Zusammenfassung der Erfindung

Die oben genannte Aufgabe wird erfindungsgemäß durch ein computer-implementiertes Verfahren zum Ermitteln einer Bewegungsgeschwindigkeit gelöst, umfassend die Schritte
a. Bereitstellen eines jeweiligen Geschwindigkeitswerts für eine jeweilige erste Funketikette einer Mehrzahl von ersten Funketiketten,
b. Bereitstellen eines jeweiligen ersten Funksignals und eines jeweiligen ersten Signalstärkeverlaufs für die jeweilige erste Funketikette der Mehrzahl der ersten Funketiketten,
c. Trainieren eines Modells zum Maschinellen Lernen auf Basis der ersten Geschwindigkeitswerte und der ersten Signalstärkeverläufe, um anhand mindestens eines Signalstärkeverlaufs einen korrespondierenden Geschwindigkeitswert zu ermitteln,
d. Ermitteln von mindestens einem zweiten initialen Geschwindigkeitswert durch Anwenden des trainierten Modells zum Maschinellen Lernen auf mindestens einen zweiten Signalstärkeverlauf von mindestens einer zweiten Funketikette,
e. Ermitteln von mindestens einem zweiten entfalteten Geschwindigkeitswert durch Entfalten einer zugehörigen Phaseninformation der mindestens einen zweiten Funketikette unter Berücksichtigung des mindestens einen zweiten initialen Geschwindigkeitswertes, und
f. Bereitstellen des mindestens einen zweiten entfalteten Geschwindigkeitswertes als Bewegungsgeschwindigkeit.

Dementsprechend ist die Erfindung auf ein computer-implementiertes Verfahren zum Ermitteln einer Bewegungsgeschwindigkeit gerichtet. Mit anderen Worten wird die Geschwindigkeit bestimmt, mit welcher sich ein Objekt, welches mit einer Funketikette etikettiert ist, bewegt. Beispielhafte Objekte sind die oben genannten Gegenstände, wie Pakete in Logistikzentren, in Warenlagern, Artikel in einer Produktionsanlage oder Fabrik (z.B. auf Fließbändern).

Sofern nicht anders angegeben, können alle Schritte des computerimplementierten Verfahrens von mindestens einer Recheneinheit durchgeführt werden, die auch als Datenverarbeitungsvorrichtung bezeichnet werden kann. Insbesondere kann die Datenverarbeitungsvorrichtung, die mindestens eine Verarbeitungsschaltung umfasst, die zur Durchführung eines erfindungsgemäßen computerimplementierten Verfahrens ausgebildet oder angepasst ist, die Schritte des computerimplementierten Verfahrens durchführen. Hierzu kann in der Datenverarbeitungsvorrichtung insbesondere ein Computerprogramm gespeichert sein, das Anweisungen umfasst, die bei Ausführung durch die Datenverarbeitungsvorrichtung, insbesondere die mindestens eine Verarbeitungsschaltung, die Datenverarbeitungsvorrichtung veranlassen, das computerimplementierte Verfahren auszuführen.

In den ersten und zweiten Verfahrensschritten werden die Eingabedaten für die Geschwindigkeitsvorhersage bereitgestellt. Für jede erste Funketikette der Mehrzahl der Funketiketten wird der erste Geschwindigkeitswert, das erste Funksignal und der erste Signalstärkeverlauf bereitgestellt. Die Eingabedaten können auch als Trainingsdaten für die Trainingsphase verstanden werden. Die Daten können für die unterschiedlichen Phasen in Trainingsdaten, Validierungsdaten und/oder Testdaten unterteilt werden, wie üblich beim Maschinellen Lernen.

Die Eingabedaten können über eine oder mehrere Eingabeschnittstellen empfangen werden. Zusätzlich oder alternativ können die Ausgabedaten, wie die Bewegungsgeschwindigkeit, auch über eine oder mehrere Ausgabeschnittstellen gesendet werden. Die Schnittstellen können als serielle oder parallele Schnittstellen ausgebildet sein. Die Schnittstellen stellen vorteilhafterweise eine effiziente und reibungslose Datenübertragung zwischen Recheneinheiten sicher. Daten können bidirektional ausgetauscht werden ohne Datenstau.

Die Eingabedaten können als Messwerte vorliegen und/oder durch eine oder mehrere Sensoreinheiten erfasst werden. Der Geschwindigkeitswert kann durch einen Sensor erfasst werden. Die Sensoren können u.a. auf der Positionserfassung durch optische Messsysteme (z.B. Kamerabilder und Lichtschranken) basieren oder durch Radar-, Lidar- oder anderen funkwellenbasierenden Lokalisierungssystemen (z.B. Real-Time Localization Systems, RTLS). Das Funksignal kann durch die Messung der empfangenen radiowellenbasierten Funketikettensignale bereitgestellt werden.

Der Signalstärkeverlauf und/oder der Verlauf der Phaseninformationswerte kann anhand des empfangenen Funksignals ermittelt werden.

In einem weiteren Verfahrensschritt wird das Modell zum Maschinellen Lernen in der Trainingsphase auf Basis der Trainingsdaten angelernt. Das Modell wird dabei für die Vorhersage des Geschwindigkeitswertes angelernt. Das Modell zum Maschinellen Lernen kann auch als Machine-Learning-Modell bezeichnet werden.

In einem weiteren Verfahrensschritt wird das trainierte Modell zum Maschinellen Lernen für die Geschwindigkeitsvorhersage auf unbekannte Daten angewendet.

Somit werden für das Training und die eigentliche Anwendung des Modells unterschiedliche erste und zweite Daten verwendet.

Die Anwendung des trainierten Modells resultiert in dem zweiten initialen Geschwindigkeitswert. Der initiale Geschwindigkeitswert kann auch als modellierte Geschwindigkeit oder aktueller Geschwindigkeitswert bezeichnet werden. Dieser dient als Eingabe für die Ermittlung des zweiten entfalteten Geschwindigkeitswertes durch Entfalten der zugehörigen Phaseninformation der mindestens einen zweiten Funketikette. Mit anderen Worten erfolgt eine dynamische Entfaltung der Phaseninformation unter Berücksichtigung der modellierten Geschwindigkeit.

Im letzten Verfahrensschritt wird der mindestens eine zweite entfaltete Geschwindigkeitswert nach der Entfaltung als Bewegungsgeschwindigkeit bereitgestellt.

Die vorliegende Erfindung stellt dadurch sicher, dass die Bewegungsgeschwindigkeit auf zuverlässige und effiziente Art und Weise ermittelt wird.

Beim Entfaltungsschritt wird der initiale Geschwindigkeitswert verwendet, welcher nicht vordefiniert ist, sondern dynamisch ermittelt wird. Im Gegensatz zum Stand der Technik sind keine festen und fehlerbehaften Annahmen über die konstante Geschwindigkeit der Funketiketten für die Verwendung der Phaseninformation erforderlich.

Die Vorhersage der Bewegungsgeschwindigkeit sowie die resultierende Bewegungsgeschwindigkeit sind folglich auch genauer bzw. zuverlässiger. Die Vorhersage unterliegt weniger Unsicherheiten und Fehlern.

In einer Ausgestaltung werden die ersten Funketiketten mehrfach unter variierten Beförderungsbedingungen durch einen vorgegebenen Bereich befördert. Dementsprechend werden die Funketiketten mehrmals durch den bestimmten Bereich bewegt, um eine qualitativ hochwertige Datengrundlage zu generieren. Mit anderen Worten werden die Trainingsdaten erweitert. Ein großer und vielfältiger Trainingsdatensatz für das anfängliche Training des Modells hat sich als besonders vorteilhaft im Hinblick auf die Vorhersage erwiesen.

In einer weiteren Ausgestaltung ist das Modell ein neuronales Netz. Demensprechend können unterschiedliche Modelle eingesetzt werden. Das Modell zum Maschinellen Lernen kann abhängig vom zugrundeliegenden technischen System, dem RFID-Gate, Nutzerpräferenzen oder sonstigen Bedingungen flexibel ausgewählt werden.

In einer weiteren Ausgestaltung ist der Geschwindigkeitswert als Geschwindigkeitsvektor definiert, wobei der Geschwindigkeitsvektor bevorzugt mindestens zwei Einträge mit einem Betrag und einer Richtung aufweist. Dementsprechend ist der Geschwindigkeitswert als mehrdimensionaler Vektor ausgebildet, wie zweidimensionaler Vektor.

In einer weiteren Ausgestaltung erfolgt die Entfaltung mit Hilfe einer numerischen, einer analytischen Entfaltung oder mit Hilfe von Maschinellem Lernen.

Dementsprechend können die Ermittlung des mindestens einen zweiten initialen Geschwindigkeitswertes sowie die Ermittlung des mindestens einen zweiten entfalteten Geschwindigkeitswertes durch Maschinelles Lernen durchgeführt werden (Entfaltung). Mit anderen Worten werden die beiden Schritte mittels Maschinellem Lernen durchgeführt und können hierfür auch zusammengefasst werden. Hierfür kann ein gemeinsames Modell eingesetzt werden oder zwei unterschiedliche Modelle.

Alternativ wird lediglich die Ermittlung des mindestens einen zweiten initialen Geschwindigkeitswertes mittels maschinellem Lernen durchgeführt. Für die Entfaltung hingegen wird ein anderer Ansatz verwendet. Mit anderen Worten wird lediglich ein Schritt mittels Maschinellem Lernen durchgeführt.

In einer weiteren Ausgestaltung weist das computer-implementierte Verfahren weiterhin auf
- Rekonstruieren von mindestens einer Ortsposition und/oder mindestens einer Bewegungsrichtung des mindestens einen zweiten Funketiketts auf Basis des mindestens einen zweiten entfalteten Geschwindigkeitswertes, und/oder
- Verfolgen von mindestens einem zugehörigen Objekt in Abhängigkeit von der mindestens einen Ortsposition, wobei
das mindestens eine zugehörige Objekt mit dem mindestens einen zweiten Funketikett etikettiert ist.

Dementsprechend kann der zweite entfaltete Geschwindigkeitswert dazu verwendet werden, um die eine oder die mehreren zweiten Funketiketten zu orten. Folglich kann die zugehörige Ortsposition anhand des vorhergesagte Geschwindigkeitswertes zuverlässig und effizient bestimmt werden. Zusätzlich oder alternativ zum Orten kann eine Objektverfolgung ("Object Tracking") durchgeführt werden.

In einer weiteren Ausgestaltung weist das computer-implementierte Verfahren weiterhin auf
- Ausgeben des mindestens einen zweiten initialen Geschwindigkeitswertes, des mindestens einen zweiten entfalteten Geschwindigkeitswertes und/oder anderer zugehöriger Daten auf einer Anzeigeeinheit,
- Speichern des mindestens einen zweiten initialen Geschwindigkeitswertes, des mindestens einen zweiten entfalteten Geschwindigkeitswertes und/oder anderer zugehöriger Daten in einer Speichereinheit, und/oder
- Übermitteln des mindestens einen zweiten initialen Geschwindigkeitswertes, des mindestens einen zweiten entfalteten Geschwindigkeitswertes und/oder anderer zugehöriger Daten an eine Recheneinheit.

Dementsprechend können eine oder mehrere Maßnahmen nach der Bereitstellung der Bewegungsgeschwindigkeit als Ausgabewert des erfindungsgemäßen Verfahrens eingeleitet werden. Die Maßnahmen können gleichzeitig, nacheinander oder auch stufenweise durchgeführt werden.

Als erstes kann die Bewegungsgeschwindigkeit einem Nutzer oder Anwender auf einer Anzeigeeinheit einer Recheneinheit angezeigt werden. Weiterhin kann die Bewegungsgeschwindigkeit gespeichert werden, der Geschwindigkeitswert selbst oder in Form einer entsprechenden Nachricht oder Mitteilung an eine andere Einheit, wie ein Endgerät, eine Steuereinheit oder sonstige Recheneinheit übertragen werden. Die empfangende Recheneinheit kann nach dem Empfang ebenfalls weitere entsprechende Maßnahmen einleiten. Weitere Maßnahmen sind beispielsweise Steuerungsmaßnahmen.

Beispielsweise kann eine Recheneinheit eines technischen Systems die Bewegungsgeschwindigkeit empfangen und in Abhängigkeit von dieser eine Steuerungsmaßnahme triggern. Die Recheneinheit kann auch vor dem Einleiten einer Maßnahme die Bewegungsgeschwindigkeit überprüfen, freigeben und/oder verwerfen.

Dies hat den Vorteil, dass jegliche Maßnahmen nach der erfolgten Geschwindigkeitsvorhersage auch zuverlässig und zeitnah umgesetzt werden.

Ferner betrifft die Erfindung ein technisches System zum Durchführen des obigen Verfahrens.

Die Erfindung betrifft ferner ein Computerprogrammprodukt mit einem Computerprogramm, das Mittel zur Durchführung des oben beschriebenen Verfahrens aufweist, wenn das Computerprogramm auf einer programmgesteuerten Einrichtung zur Ausführung gebracht wird.

Ein Computerprogrammprodukt, wie z.B. ein Computerprogramm-Mittel, kann beispielsweise als Speichermedium, wie z.B. Speicherkarte, USB-Stick, CD-ROM, DVD, oder auch in Form einer herunterladbaren Datei von einem Server in einem Netzwerk bereitgestellt oder geliefert werden. Dies kann zum Beispiel in einem drahtlosen Kommunikationsnetzwerk durch die Übertragung einer entsprechenden Datei mit dem Computerprogrammprodukt oder dem Computerprogramm-Mittel erfolgen. Als programmgesteuerte Einrichtung kommt insbesondere eine Steuereinrichtung, wie beispielsweise eine Industriesteuerungs-PC oder eine Speicherprogrammierbare Steuerung oder ein Programmable Logic Controller, kurz PLC, oder ein Mikroprozessor für eine Smartcard oder dergleichen in Frage.

### 4. Kurze Beschreibung der Zeichnungen

In der folgenden detaillierten Beschreibung werden vorliegend bevorzugte Ausführungsformen der Erfindung weiter beschrieben mit Bezug auf die folgenden Figuren.
FIG 1 zeigt ein schematisches Ablaufdiagramm des erfindungsgemäßen Verfahrens.
FIG 2 zeigt eine schematische Darstellung eines RFID-Gates mit vier Antennen gemäß dem Stand der Technik.
FIG 3 zeigt ein schematisches Ablaufdiagramm des Verfahrens gemäß einer Ausführungsform der Erfindung.

### 5. Beschreibung der bevorzugten Ausführungsformen

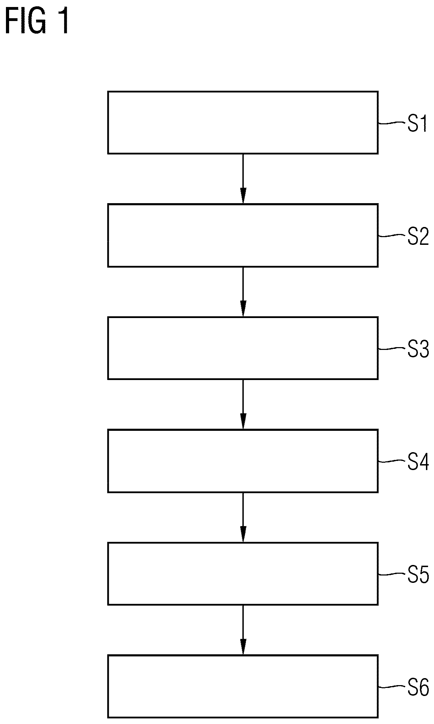

Im Folgenden werden bevorzugte Ausführungsformen der vorliegenden Erfindung in Bezug auf die Figur 1 beschrieben.

Figur 1 stellt ein Ablaufdiagramm des erfindungsgemäßen Verfahrens mit den Verfahrensschritten S1 bis S6 schematisch dar.

### Vorhersage des initialen Geschwindigkeitswertes

Anhand von gelabelten Trainingsdaten wird gemäß einer Ausführungsform der Erfindung das Modell zum Maschinellen Lernen derart trainiert, dass es, gegeben eine Reihe von RSSI-Zeitserien als Eingangsgrößen den Geschwindigkeitswert der RFID-Tags (TAG) ausgibt.

Die RSSI-Zeitserien können als separate Serien pro aufzeichnender Antenne am RFID-Gate vorliegen. Der Geschwindigkeitswert kann als zweidimensionaler Vektor mit dem Betrag und der Richtung (z.B. links/rechts/oben/unten) vorliegen. Das Modell zum Maschinellen Lernen kann als neuronales Netz vorliegen, wie ein faltendes neuronales Netz (engl. Convolutional Neural Network, CNN).

Durch eine Differenzbildung können Geschwindigkeitsvektoren aus den Positionsdaten berechnet werden und als Ground-Truth-Labels beim Training des neuronalen Netzes bereitgestellt werden.

Auf diese Weise kann vorab ein Modell generiert werden, das im Weiteren verwendet wird, um aus den pro Antenne für jeden RFID-Tag separat empfangenen RSSI-Werten auf die aktuelle Geschwindigkeit des RFID-Tags zu schließen.

### Dynamische Entfaltung der Phaseninformation unter Berücksichtigung des initialen Geschwindigkeitswertes

Mit Hilfe des trainierten Modells zum Maschinellen Lernen kann anschließend die Phaseninformation dynamisch entfaltet werden. Gemäß einer Ausführungsform der Erfindung werden die während des Betriebs eingehenden RSSI-Werte und Phasenmessungen pro Antenne (in der Regel liegen beide Messgrößen auf demselben Zeitgitter) in gleitenden Zeitfenstern (von typischerweise 1-3s Länge) gebündelt, so dass auf Basis der RSSI-Werte eine Auswertung des trainierten Modells erfolgen kann.

Es wird angenommen, dass die Geschwindigkeit über die Dauer des Zeitfensters nahezu konstant bleibt. Bei schnellen Durchfahrten durch das RFID-Gate kann das Zeitfenster reduziert werden. Der initiale Geschwindigkeitswert wird nun als Eingabe in den Entfaltungsalgorithmus verwendet. Bei der Entfaltung wird der Startwert der Geschwindigkeit derart optimiert, so dass eine maximal konsistente und zeitlich entfaltete Sequenz von Phasenwerten erzielt wird. Der korrespondierende entfaltete Geschwindigkeitswert kann daher vom initialen Wert innerhalb gewisser Grenzen abweichen.

Gemäß einer Ausführungsform der Erfindung wird unter Verwendung des initialen Geschwindigkeitswertes eine konsistente und konvergierende Entfaltung (engl. "Unwrapping") durchgeführt. Damit können die einzelnen und antennenspezifischen Phasenmessungen innerhalb des Zeitfensters in örtliche Positionsänderungen Δx zwischen zwei Messzeitpunkten umgerechnet werden. Aus den Positionsänderungen kann eine zentimetergenaue Trajektorie (= Zeitserie von Abstandswerten) bestimmt werden. Falls beispielsweise relative Abstände von mindestens 2 oder 3 Antennen rekonstruierbar sind, können etwaige Doppeldeutigkeiten der Bewegung in 2-D (Ebene) bzw. 3-D (Raum) konsistent aufgelöst werden. Im nächsten Zeitschritt wird das Aggregationsfenster weitergeschoben und die Schritte werdem wiederholt. Auf diese Weise lassen sich auch Trajektorien (= Ketten von Positionsänderungen) über längere Zeiträume stückweise konsistent zusammensetzen.

Bei der Entfaltung können numerischen oder analytische Entfaltungsverfahren verwendet werden. Alternativ kann die Entfaltung durch ein Machine-Learning-Modell erfolgen oder ergänzt werden. Beispielsweise kann ein neurales Netz erstellt und trainiert werden, das unmittelbar den Zusammenhang zwischen den unkorrigierten Phasendaten sowie der prädizierten Tag-Geschwindigkeit und den aus dem Kamera-Tracking bekannten Positionsänderungen lernt. Dadurch kann u.a. die Einschränkung umgangen werden, dass die Geschwindigkeit des RFID-Tags als näherungsweise konstant über die Länge des Verschiebe-Zeitfensters angenommen wird. Dies hat sich für schnelle Bewegungsmuster als besonders vorteilhaft erwiesen.

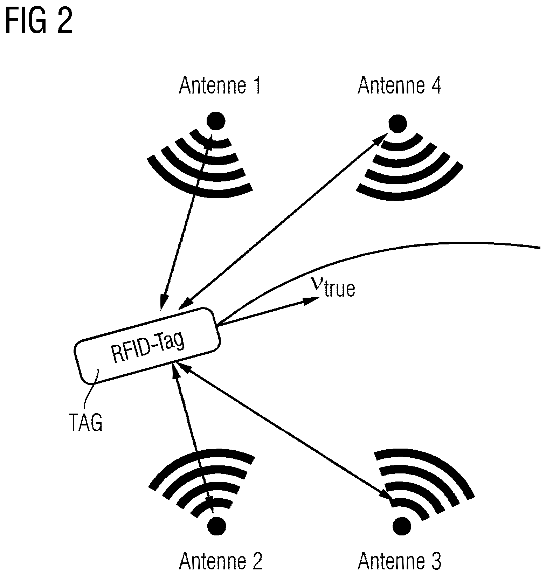

Figur 2 zeigt eine schematische Darstellung eines RFID-Gates mit vier Antennen gemäß dem Stand der Technik. Im Zentrum des RFID-Gates ist ein bewegter RFID-Tag angeordnet.

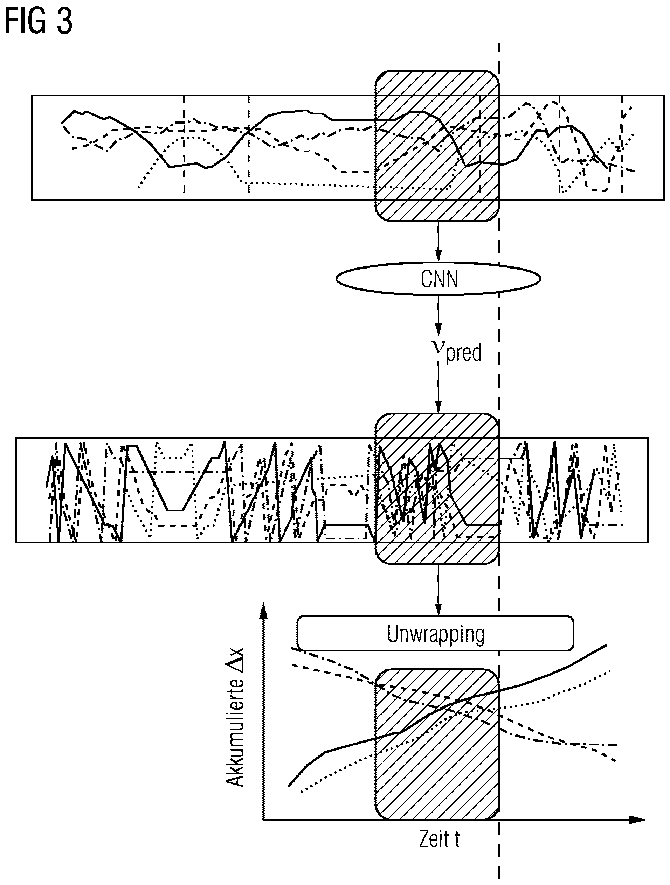

Figur 3 zeigt ein schematisches Ablaufdiagramm des Verfahrens gemäß einer Ausführungsform der Erfindung. Zunächst erfolgt in einem ersten Teil die Geschwindigkeitsvorhersage. Daran anschließend erfolgt in einem zweiten Teil die Entfaltung.

## Patentansprüche

1. Computer-implementiertes Verfahren zum Ermitteln einer Bewegungsgeschwindigkeit, umfassend die Schritte
a. Bereitstellen eines jeweiligen Geschwindigkeitswerts für eine jeweilige erste Funketikette (TAG) einer Mehrzahl von ersten Funketiketten (TAG) (S1),
b. Bereitstellen eines jeweiligen ersten Funksignals und eines jeweiligen ersten Signalstärkeverlaufs für die jeweilige erste Funketikette (TAG) der Mehrzahl der ersten Funketiketten (TAG) (S2),
c. Trainieren eines Modells zum Maschinellen Lernen auf Basis der ersten Geschwindigkeitswerte und der ersten Signalstärkeverläufe, um anhand mindestens eines Signalstärkeverlaufs einen korrespondierenden Geschwindigkeitswert zu ermitteln (S3),
d. Ermitteln von mindestens einem zweiten initialen Geschwindigkeitswert durch Anwenden des trainierten Modells zum Maschinellen Lernen auf mindestens einen zweiten Signalstärkeverlauf von mindestens einer zweiten Funketikette (TAG) (S4),
e. Ermitteln von mindestens einem zweiten entfalteten Geschwindigkeitswert durch Entfalten einer zugehörigen Phaseninformation der mindestens einen zweiten Funketikette (TAG) unter Berücksichtigung des mindestens einen zweiten initialen Geschwindigkeitswertes (S5), und
f. Bereitstellen des mindestens einen zweiten entfalteten Geschwindigkeitswertes als Bewegungsgeschwindigkeit (S6).

2. Computer-implementiertes Verfahren nach Anspruch 1, wobei die ersten Funketiketten (TAG) mehrfach unter variierten Beförderungsbedingungen durch einen vorgegebenen Bereich befördert werden.

3. Computer-implementiertes Verfahren nach Anspruch 1 oder Anspruch 2, wobei das Modell ein neuronales Netz ist.

4. Computer-implementiertes Verfahren nach einem der vorhergehenden Ansprüche, wobei der Geschwindigkeitswert als Geschwindigkeitsvektor definiert ist, wobei der Geschwindigkeitsvektor bevorzugt mindestens zwei Einträge mit einem Betrag und einer Richtung aufweist.

5. Computer-implementiertes Verfahren nach einem der vorhergehenden Ansprüche, wobei die Entfaltung mit Hilfe einer numerischen, einer analytischen Entfaltung erfolgt oder mit Hilfe von Maschinellem Lernen.

6. Computer-implementiertes Verfahren nach einem der vorhergehenden Ansprüche, weiterhin aufweisend
- Rekonstruieren von mindestens einer Ortsposition und/oder mindestens einer Bewegungsrichtung des mindestens einen zweiten Funketiketts (TAG) auf Basis des mindestens einen zweiten entfalteten Geschwindigkeitswertes, und/oder
- Verfolgen von mindestens einem zugehörigen Objekt in Abhängigkeit von der mindestens einen Ortsposition, wobei
das mindestens eine zugehörige Objekt mit dem mindestens einen zweiten Funketikett (TAG) etikettiert ist.

7. Computer-implementiertes Verfahren nach einem der vorhergehenden Ansprüche, weiterhin aufweisend
- Ausgeben des mindestens einen zweiten initialen Geschwindigkeitswertes, des mindestens einen zweiten entfalteten Geschwindigkeitswertes und/oder anderer zugehöriger Daten auf einer Anzeigeeinheit,
- Speichern des mindestens einen zweiten initialen Geschwindigkeitswertes, des mindestens einen zweiten entfalteten Geschwindigkeitswertes und/oder anderer zugehöriger Daten in einer Speichereinheit, und/oder
- Übermitteln des mindestens einen zweiten initialen Geschwindigkeitswertes, des mindestens einen zweiten entfalteten Geschwindigkeitswertes und/oder anderer zugehöriger Daten an eine Recheneinheit.

8. Technisches System zum Durchführen des Verfahrens nach einem der vorhergehenden Ansprüche.

9. Computerprogrammprodukt mit einem Computerprogramm, das Mittel zur Durchführung des Verfahrens nach einem der Ansprüche 1 bis 7 aufweist, wenn das Computerprogramm auf einer programmgesteuerten Einrichtung zur Ausführung gebracht wird.
